# NEUE EUROPÄISCHE PATENTSCHRIFT

(11) **EP 0 964 013 B2**
(45) Veröffentlichungstag und Bekanntmachung des Hinweises auf die Entscheidung über den Einspruch: **29.08.2018**
(45) Hinweis auf die Patenterteilung: 17.12.2003
(21) Anmeldenummer: 99110684.0
(22) Anmeldetag: 02.06.1999
(51) Int. Cl.: C08G 18/48, C08G 18/10

(54) **Verfahren zur Herstellung von Polyurethan-Elastomeren**
Process for the preparation of polyurethane elastomers
Procédé de préparation d' élastomères polyuréthane

(30) Priorität: 12.06.1998 DE 19826398
(43) Veröffentlichungstag der Anmeldung: 15.12.1999
(73) Patentinhaber: BASF SE, 67056 Ludwigshafen am Rhein (DE)
(72) Erfinder: Bartz, Thomas Dr., 82140 Olching (DE); Hohl, Karl-Werner, 82291 Mammendorf (DE)
(74) Vertreter: BASF IP Association

(56) Entgegenhaltungen:
- EP-A- 0 778 029
- WO-A1-98/01492
- US-A- 3 681 291
- US-A- 3 718 624
- US-A- 3 905 925
- US-A- 4 190 711
- US-A- 4 284 506
- US-A- 4 294 951
- US-A- 4 327 204
- US-A- 4 695 618
- US-A- 5 013 810
- US-A- 5 236 960
- DATABASE WPI Section Ch, Week 9646 Derwent Publications Ltd., London, GB; Class A25, AN 96-461381 XP002114195 & JP 08 231669 A (MITSUBISHI CHEM CORP), 10. September 1996 (1996-09-10)
- WOODS G.: 'The ICI Polyurethanes Book', 1987, JOHN WILEY & SONS Seiten 175, - 182-192
- 70 EP Titel (Engl./Deutsch)
- Synonyme für Polytetramethylenetherglycol
- Utech Asia '97 Conference proceedings paper 43 pages 1-5 "low unsaturation PPG Polyol Blends with PTMEG in elastomers", Fishback et al.
- JP08085717 und Maschinenübersetzung von JP08085717

## Beschreibung

Gegenstand der Erfindung ist ein Verfahren zur Herstellung von Polyurethan-Elastomeren, insbesondere Gießelastomeren, sowie für dieses Verfahren geeignete Quasi-Prepolymere.

Polyurethan-Gießelastomere werden in großem Umfang in der Technik eingesetzt. Sie werden zumeist zur Herstellung von Formteilen verwendet. Ihre Herstellung erfolgt üblicherweise durch Umsetzung einer Isocyanatkomponente mit einer Komponente, die mit Isocyanatgruppen reaktive Wasserstoffatome enthält. Bei der letztgenannten Komponente handelt es sich zumeist um mehrfunktionelle Alkohole. Häufig werden als Alkoholkomponente zur Herstellung von Polyurethan-Gießelastomeren Polytetramethylenetherglykole, im folgenden als PTMEG bezeichnet, verwendet. Derartige Produkte werden zumeist durch Polymerisation von Tetrahydrofuran hergestellt, zeichnen sich durch eine sehr enge Molekulargewichtsverteilung aus und sind streng difunktionell. Unter Verwendung von PTMEG hergestellte Gießelastomere zeichnen sich durch gute mechanische Eigenschaften, insbesondere bei der Zug- und Weiterreißfestigkeit, dem Abrieb und der Elastizität aus. Nachteilig an den PTMEG sind insbesondere der hohe Preis sowie ihre hohe Kristallisationsneigung, die sich nachteilig auf Tieftemperaturverhalten auswirken.

Es hat daher nicht an Versuchen gefehlt, die PTMEG in den Gießelastomeren zumindest teilweise durch herkömmliche Polyole, insbesondere Polyetherole, die durch Anlagerung von Ethylenoxid und/oder Propylenoxid an H-funktionelle Startsubstanzen hergestellt werden, zu ersetzen.

So werden in US-A-4,182,898 Prepolymere zur Herstellung von Polyurethan-Elastomeren beschrieben, die auf der Basis von PTMEG und Polyesterolen hergestellt werden. Bei der gemeinsamen Verwendung von PTMEG und Polyesterolen kommt es jedoch auf Grund der schlechten Verträglichkeit dieser Produkte untereinander zu Mischungsproblemen bei der Verarbeitung. Außerdem sind nur wenige Polyesterole für dieses Verfahren geeignet.

US-A-5,340,902 beschreibt ein Verfahren zur Herstellung von Spandex-Fasern durch Einsatz von zweifunktionellen Polyetherolen mit einem sehr niedrigen Gehalt an Monoolen. Die dort beschriebenen Produkte weisen jedoch einen wesentlich schlechteren Wert für den Abrieb auf als Produkte, die unter Verwendung von PTMEG hergestellt wurden.

US-A-4,120,850 beschreibt die Verwendung von Copolymeren aus PTMEG und Ethylenoxid zur Herstellung von Polyurethan-Elastomeren. Die Herstellung der Copolymeren aus PTMEG und Ethylenoxid erfordert jedoch einen erhöhten Aufwand, außerdem sinkt durch den Einbau des Ethylenoxids die Hydrolysebeständigkeit der Polymeren.

In US-A-5,545,706 werden Polyurethan-Elastomere beschrieben, bei deren Herstellung Prepolymere aus PTMEG und Monoolen eingesetzt werden, um die Reißdehnung bei gleicher Härte zu verbessern. Andere mechanische Eigenschaften, wie Abrieb und Zugfestigkeit, werden jedoch nachteilig beeinflußt.

US-A-3,980,606 beschreibt ein Verfahren zur Herstellung von luftgefüllten Fahrzeugreifen aus Polyurethan-Elastomeren. Ihre Herstellung erfolgt durch Umsetzung eines NCO-Prepolymeren aus TDI und PTMEG und eines NCO-Prepolymeren aus TDI und Polypropylenglykol mit Aminen. Das Verfahren ist durch die Verwendung der beiden NCO-Prepolymeren sehr umständlich, außerdem werden für die Herstellung der beschriebenen Elastomere sehr niedermolekulare Einsatzprodukte benötigt, die für Gießelastomere ungebräuchlich sind.

Aufgabe der Erfindung war es, Polyurethan-Gießelastomere zu entwickeln, die sich durch gute mechanische Eigenschaften, insbesondere bei der Zug- und Weiterreißfestigkeit, dem Abrieb und der Elastizität auszeichnen und die außerdem gute Tieftemperatureigenschaften aufweisen. Außerdem sollte das PTMEG teilweise durch Polyetherole auf Basis von Ethylenoxid und/oder Propylenoxid ersetzt werden.

Die Aufgabe konnte überraschenderweise gelöst werden durch ein Verfahren zur Herstellung von Polyurethan-Gießelastomeren, bei dem ein NCO-Prepolymer aus mindestens einem zweifunktionelles Polyetherol auf Basis von Ethylenoxid und/oder Propylenoxid mit einer Polyolkomponente (b) umgesetzt wird, die kein 3,5-Dimethylthio-2,4-toluendiamin enthält und als Polyole ausschließlich Polytetramethylenetherglykol enthält, wobei der Anteil des Polytetramethylenetherglykols an der Gesamtmenge der hydroxylfunktionellen Verbindungen der Komponenten a) und b) 30 bis 70 Massen-% beträgt.

Gegenstand der Erfindung ist demzufolge ein Verfahren zur Herstellung von Polyurethan-Gießelastomeren durch Umsetzung einer Isocyanatkomponente a) mit einer Polyolkomponente b), dadurch gekennzeichnet, daß als Isocyanatkomponente a) ein Semiprepolymer, herstellbar durch Umsetzung von mindestens einem Polyisocyanat mit mindestens einem zweifunktionellen Polyetherol, herstellbar durch Anlagerung von Ethylenoxid und/oder Propylenoxid an H-funktionelle Startsubstanzen, und als Polyolkomponente (b) kein 3,5-Dimethylthio-2,4-toluendiamin enthält und als Polyole ausschließlich Polytetramethylenetherglykol enthält, wobei der Anteil des Polytetramethylenetherglykols an der Gesamtmenge der hydroxylfunktionellen Verbindungen der Komponenten a) und b) 30 bis 70 Massen-% beträgt. mindestens eine Verbindung mit mindestens zwei reaktiven Wasser- stoffatomen, die mindestens Polytetramethylenglykol enthält, eingesetzt wird.

Als Polyisoycanate werden vorzugsweise aromatische Diisocyanate, insbesondere Toluylendiisocyanat, Diphenylmethandiisocyanat, oder Mischungen dieser Diisocyanate, vorzugsweise Diphenylmethan- diisocyanat, eingesetzt. Zur besseren 10 Handhabbarkeit kann das Diphenylmethandiisocyanat durch chemische Modifizierung ver- flüssigt werden, beispielsweise durch teilweise Uretdionisierung oder Urethanisierung.

Als zweifunktionelle Polyetherole auf Basis von Ethylenoxid und/oder Propylenoxid können reine Polyethylenoxide, vorzugsweise jedoch reine Polypropylenoxide und/oder Polyetherole mit Ethylenoxid- und Propylenoxideinheiten. Bei den Polyetherolen mit Ethylenoxid- und Propylenoxideinheiten handelt es sich vorzugsweise um Polypropylenoxide mit Ethylenoxid-Endcaps. Die zweifunktionelle Polyetherole besitzen vorzugsweise ein Molekulargewicht von 400 bis 6000, besonders bevorzugt von 1000 bis 4000 g/mol, auf.

Die Herstellung der Quasi-Präpolymeren erfolgt nach an sich bekannten Verfahren durch Umsetzung der entsprechenden Mengen an Polyol und Isocyanat, in Anwesenheit oder vorzugsweise in Abwesenheit von üblichen Urethan-Bildungskatalysatoren. Zur Erzielung der entsprechenden NCO-Gehalte der Quasi-Präpolymeren wird das Diisocyanat in der bis zu achtfachen stöchiometrischen Menge, bezogen auf die zweifunktionellen Polyetherole, versetzt. Die Quasi-Präpolymere sind bei Raumtemperatur flüssig und gut lagerstabil.

Zur Herstellung der erfindungsgemäßen Polyurethan-Elastomere werden die Quasi-Präpolymere mit einer Polyol-Komponente umgesetzt.

Die Polyolkomponente enthält als Polyol ausschließlich PTMEG.

Dieses hat vorzugsweise ein Molekulargewicht von mindestens 500 bis 4000 g/mol, vorzugsweise 1000 g/mol bis 3000 g/mol. Generell gilt, daß mit steigendem Molekulargewicht des PTMEG die resultierenden Gießelastomere elastischer und abriebfester sind sowie eine bessere Dehnung aufweisen. Mit sinkendem Molekulargewicht des PTMEG sinkt die Kristallisationsneigung im Elastomer, was zu besserem Tieftemperaturverhalten führt, und die Systeme lassen sich auf Grund der geringeren Viskosität der niedermolekularen PTMEG besser verarbeiten. Die PTMEG werden daher je nach den gewünschten Eigenschaften der Elastomere ausgewählt.

Die Polyolkomponente kann neben dem PTMEG noch Kettenverlängerer, Katalysatoren sowie die üblichen Hilfs- und Zusatzstoffe enthalten, wobei diese kein 3,5-Dimethylthio-2,4-toluendiamin enthält.

Die Polyol- komponente enthält als Polyole ausschließlich PTMEG.

Als Kettenverlängerer werden vorzugsweise kurzkettige Diole mit Molekulargewichten kleiner 400 g/mol verwendet. Beispiele hierfür sind Ethandiol, Propandiol, Butandiol, Pentandiol, Hexandiol oder 4-Hydroxymethylbenzylalkohol. Auch wenig reaktive, aromatische Amine, wie beispielsweise Diethyltoluendiamin (DETDA) können als Kettenverlängerer zum Einsatz kommen.

Als Katalysatoren werden die üblichen und bekannten Urethanbildungskatalysatoren verwendet, beispielsweise tertiäre Amine und/oder Metallsalze, Zinnsalze.

Als Hilfs- und Zusatzstoffe werden, je nach den gewünschten Eigenschaften und dem Einsatzgebiet der Gießelastomere, beispielsweise Zeolithe, Stabilisatoren, Füllstoffe, Verstärkungsmittel, Farbstoffe oder Flammschutzmittel zugegeben. Bevorzugt werden den Rezepturen Zeolithpasten zugegeben.

Das Mengenverhältnisse von PTMEG zu zweifunktionellen Polyetherolen auf Basis von Ethylenoxid und/oder Propylenoxid im Elastomeren ist so zu wählen, daß der Anteil an PTMEG an der Gesamtmenge der hydroxylfunktionellen Verbindungen der Komponenten a) und b) 30 bis 90 Massenprozent beträgt. Bei einem PTMEG-Gehalt von weniger als 30 % verschlechtern sich die mechanischen Eigenschaften und insbesondere der Abrieb drastisch. Bei einem PTMEG-Gehalt über 90 % gelingt die Abschwächung der PTMEG-Kristallisation nicht mehr.

Die Umsetzung der Quasi-Prepolymeren mit der Polyolkomponente wird so durchgeführt, daß das Verhältnis der Isocyanat- zu den Polyolgruppen 120:100 bis 80:100, vorzugsweise 105:100 bis 95:100, beträgt. Die Mischung der Polyolkomponente mit der Isocyanatkomponente kann durch einfaches mechanisches Rühren, insbesondere jedoch mittels der in der Polyurethanherstellung üblichen und gebräuchlichen Mischköpfe.

Überraschenderweise hat sich gezeigt, daß bei der erfinderischen Arbeitsweise Gießelastomere erhalten werden können, deren mechanische Eigenschaften solchen Produkten, die ausschließlich unter Verwendung von PTMEG als Polyole hergestellt wurden, entsprechen und diese in Bezug auf ihre Tieftemperatureigenschaften noch übertreffen.

Wenn man umgekehrt verfährt und, bei gleichen Mengen der Einsatzstoffe, die PTMEG mit den Isocyanaten zu Quasi-Prepolymeren umsetzt und die zweifunktionellen Polyetherole auf Basis von Ethylenoxid und/oder Propylenoxid ausschließlich in der Polyolkomponente einsetzt, erhält man überraschenderweise Elastomere, die sich durch deutlich schlechtere mechanische Eigenschaften auszeichnen. Insbesondere so wesentliche Materialeigenschaften wie Abrieb, Zugfestigkeit, Reißdehnung, werden deutlich verschlechtert. Je höher das Molekulargewicht der zweifunktionellen Polyetherole auf Basis von Ethylenoxid und/oder Propylenoxid bei der nicht erfindungsgemäßen Arbeitsweise ist, desto deutlicher verschlechtern sich die mechanischen Eigenschaften der Gießelastomere.

Die erfindungsgemäßen Gießelastomere finden auf Grund ihrer hervorragenden mechanischen Eigenschaften, insbesondere der guten Werte für Zugfestigkeit, Reißdehnung, Weiterreißfestigkeit und Druckverformungsrest, dem geringen Abrieb und der ausgezeichneten Tieftemperatureigenschaften insbesondere Verwendung als Werkstoffe für Pumpenelemente, aber auch als hydrolysebeständige Verschleißschutzbeschichtungen, sogar als Material für stark dynamisch belastete Räder und Rollen, nicht zuletzt als Inline-Skater-Rollen, und schließlich auch als technische Bauteile in tropischem Klima oder unter tiefen Temperaturen.

Die Erfindung soll an nachstehenden Beispielen näher erläutert werden.

### Beispiel 1 (Vergleich)

655 g 4,4'-MDI und 80 g uretdionmodifiziertes 4,4'-MDI (Lupranat® MM 103 der BASF AG) wurden unter Rühren auf 60°C erwärmt. Anschließend wurden 265 g PTMEG mit einem Molekulargewicht von 2000 zugegeben und die Reaktionsmischung unter Rühren auf 80°C erwärmt. Nach Erreichen dieser Temperatur wurde das Gemisch noch 90 Minuten gerührt. Das resultierende Prepolymer hatte einen NCO-Gehalt von 23 Gew.-% und eine Viskosität bei 25°C, bestimmt nach DIN 53 018, von 350 mPas. Zur Herstellung der Elastomeren wurde das Prepolymer mit einem Gemisch aus 89,5 Gew.-% PTMEG mit einem Molekulargewicht von 2000, 10 Gew.-% Butandiol-1,4 und 0,5 Gew.-% Aminkatalysator Lupragen® N 201 der BASF AG (10 %-ig in Dipropylenglykol) unter Verwendung einer Niederdruckmaschine bei 50°C im Gewichtsverhältnis Polyolkomponente:Isocyanatkomponente von 100:65,5 vermischt. Die mechanischen Eigenschaften des resultierenden Gießelastomeren sind in Tabelle 1 festgehalten.

### Beispiel 2

437 g 4,4'-MDI und 73 g uretdionmodifiziertes 4,4'-MDI (Lupranat® MM 103 der BASF AG) wurden unter Rühren auf 60°C erwärmt. Anschließend wurden 490 g eines zweifunktionellen Polyoxypropylenoxids mit einem mittleren Molekulargewicht von 1000 g/mol (Lupranol® 1100 der BASF AG) zugegeben und die Reaktionsmischung unter Rühren auf 80°C erwärmt. Nach Erreichen dieser Temperatur wurde das Gemisch noch 90 Minuten gerührt. Das resultierende Prepolymer hatte einen NCO-Gehalt von 12,9 Gew.-% und eine Viskosität bei 25°C, bestimmt nach DIN 53 018, von 2900 mPas. Zur Herstellung der Elastomeren wurde das Prepolymer mit einem Gemisch aus 86,5 Gew.-% PTMEG mit einem Molekulargewicht von 2000, 13 Gew.-% Butandiol-1,4 und 0,5 Gew.-% Aminkatalysator Lupragen® N 201 der BASF AG (10 %-ig in Dipropylenglykol) unter Verwendung einer Niederdruckmaschine bei 50°C im Gewichtsverhältnis Polyolkomponente:Isocyanatkomponente von 100:117 vermischt. Die mechanischen Eigenschaften des resultierenden Gießelastomeren sind in Tabelle 1 festgehalten.

### Beispiel 3

432 g 4,4'-MDI und 73 g uretdionmodifiziertes 4,4'-MDI (Lupranat® MM 103 der BASF AG) wurden unter Rühren auf 60°C erwärmt. Anschließend wurden 495 g eines zweifunktionellen Polyoxypropylenoxids mit einem mittleren Molekulargewicht von 2000 g/mol (Lupranol® 1000 der BASF AG) zugegeben und die Reaktionsmischung unter Rühren auf 80°C erwärmt. Nach Erreichen dieser Temperatur wurde das Gemisch noch 90 Minuten gerührt. Das resultierende Prepolymer hatte einen NCO-Gehalt von 14,4 Gew.-% und eine Viskosität bei 25°C, bestimmt nach DIN 53 018, von 1000 mPas. Zur Herstellung der Elastomeren wurde das Prepolymer mit einem Gemisch aus 86 Gew.-% PTMEG mit einem Molekulargewicht von 2000, 13,5 Gew.-% Butandiol-1,4 und 0,5 Gew.-% Aminkatalysator Lupragen® N 201 der BASF AG (10 %-ig in Dipropylenglykol) unter Verwendung einer Niederdruckmaschine bei 50°C im Gewichtsverhältnis Polyolkomponente:Isocyanatkomponente von 100:117 vermischt. Die mechanischen Eigenschaften des resultierenden Gießelastomeren sind in Tabelle 1 festgehalten.

### Beispiel 4

432 g 4,4'-MDI und 73 g uretdionmodifiziertes 4,4'-MDI (Lupranat® MM 103 der BASF AG) wurden unter Rühren auf 60°C erwärmt. Anschließend wurden 495 g eines zweifunktionellen Polyoxypropylenoxids mit einem Ethylenoxid-Endcap und einem mittleren Molekulargewicht von 4000 g/mol (Lupranol® 2043 der BASF AG) zugegeben und die Reaktionsmischung unter Rühren auf 80°C erwärmt. Nach Erreichen dieser Temperatur wurde das Gemisch noch 90 Minuten gerührt. Das resultierende Prepolymer hatte einen NCO-Gehalt von 15,3 Gew.-% und eine Viskosität bei 25°C, bestimmt nach DIN 53018, von 700 mPas. Zur Herstellung der Elastomeren wurde das Prepolymer mit einem Gemisch aus 85 Gew.-% PTMEG mit einem Molekulargewicht von 2000, 14,5 Gew.-% Butandiol-1,4 und 0,5 Gew.-% Aminkatalysator Lupragen® N 201 der BASF AG (10 %-ig in Dipropylenglykol) unter Verwendung einer Niederdruckmaschine bei 50°C im Gewichtsverhältnis Polyolkomponente:Isocyanatkomponente von 100:111 vermischt. Die mechanischen Eigenschaften des resultierenden Gießelastomeren sind in Tabelle 1 festgehalten.

### Beispiel 5 (Vergleich)

655 g 4,4'-MDI und 80 g uretdionmodifiziertes 4,4'-MDI (Lupranat® MM 103 der BASF AG) wurden unter Rühren auf 60°C erwärmt. Anschließend wurden 265 g PTMEG mit einem Molekulargewicht von 2000 zugegeben und die Reaktionsmischung unter Rühren auf 80°C erwärmt. Nach Erreichen dieser Temperatur wurde das Gemisch noch 90 Minuten gerührt. Das resultierende Prepolymer hatte einen NCO-Gehalt von 23 Gew.-% und eine Viskosität bei 25°C, bestimmt nach DIN 53 018, von 350 mPas. Zur Herstellung der Elastomeren wurde das Prepolymer mit einem Gemisch aus 85 Gew.-% Pluracol HP 2500 D, einem mit Ethylenoxid endgecapten Polypropylenoxid mit niedrigem Monoolanteil mit einem Molekulargewicht von 2500, 14,5 Gew.-% Butandiol-1,4 und 0,5 Gew.-% Aminkatalysator Lupragen® N 201 der BASF AG (10 %-ig in Dipropylenglykol) unter Verwendung einer Niederdruckmaschine bei 50°C im Gewichtsverhältnis Polyolkomponente:Isocyanatkomponente von 100:72 vermischt. Die mechanischen Eigenschaften des resultierenden Gießelastomeren sind in Tabelle 1 festgehalten.

### Beispiel 6 (Vergleich)

655 g 4,4'-MDI und 80 g uretdionmodifiziertes 4,4'-MDI (Lupranat® MM 103 der BASF AG) wurden unter Rühren auf 60°C erwärmt. Anschließend wurden 265 g PTMEG mit einem Molekulargewicht von 2000 zugegeben und die Reaktionsmischung unter Rühren auf 80°C erwärmt. Nach Erreichen dieser Temperatur wurde das Gemisch noch 90 Minuten gerührt. Das resultierende Prepolymer hatte einen NCO-Gehalt von 23 Gew.-% und eine Viskosität bei 25°C, bestimmt nach DIN 53 018, von 350 mPas. Zur Herstellung der Elastomeren wurde das Prepolymer mit einem Gemisch aus 85 Gew.-% Lupranol 1000 der BASF AG, einem reinen Polypropylenoxid mit einem Molekulargewicht von 2000, 14,5 Gew.-% Butandiol-1,4 und 0,5 Gew.-% Aminkatalysator Lupragen® N 201 der BASF AG (10 %-ig in Dipropylenglykol) unter Verwendung einer Niederdruckmaschine bei 50°C im Gewichtsverhältnis Polyolkomponente:Isocyanatkomponente von 100:75 vermischt. Die mechanischen Eigenschaften des resultierenden Gießelastomeren sind in Tabelle 1 festgehalten.

**Tabelle 1**

| | Beispiel 1 | Beispiel 2 | Beispiel 3 | Beispiel 4 | Beispiel 5 | Beispiel 6 |
|---|---|---|---|---|---|---|
| Shore- A- Härte | 82 | 78 | 79 | 80 | 82 | 78 |
| Zugfestigkeit [MPa] | 32 | 26 | 32 | 22,5 | 13 | 5 |
| Reißdehnung | 520 | 550 | 640 | 730 | 500 | 140 |
| Weiterreißfestigkeit [N/mm] | 35 | 23 | 30 | 38 | 30 | 28 |
| Abrieb [mg] | 68 | 116 | 109 | 87 | 140 | 330 |
| Druckverformungsrest, 23°C, 72 h | 10 | 16 | 15 | 19 | 15 | n.g. |
| Druckverformungsrest, 70°C, 24 h | 28 | 57 | 36 | 43 | 37 | n.g. |
| Rückprall [%] | 72 | 60,5 | 67 | 64,5 | 67 | n.g. |
| Rückprall, - 10°C [%] | 35 | 17 | 27 | 31 | n.g. | n.g. |

## Patentansprüche

1. Verfahren zur Herstellung von Polyurethan-Gießelastomeren durch Umsetzung einer Isocyanatkomponente a) mit einer Polyolkomponente b), **dadurch gekennzeichnet, dass** als Isocyanatkomponente a) ein Semiprepolymer, herstellbar durch Umsetzung von mindestens einem Polyisocyanat mit mindestens einem zweifunktionellen Polyetherol, herstellbar durch Anlagerung von Ethylenoxid und/oder Propylenoxid an H-funktionelle Startsubstanzen eingesetzt wird, und dass die Polyolkomponente (b) kein 3,5-Dimethylthio-2,4-toluendiamin enthält und als Polyole
ausschließlich Polytetramethylenetherglykol
enthält,
wobei der Anteil des Polytetramethylenetherglykols an der Gesamtmenge der hydroxylfunktionellen Verbindungen der Komponenten a) und b) 30 bis 70 Massen-% beträgt.

2. Verfahren nach Anspruch 1, **dadurch gekennzeichnet, dass** das Semiprepolymer a) einen NCO-Gehalt von 10 Gew.-% NCO bis 25 Gew.-% NCO aufweist.

3. Verfahren nach Anspruch 1, **dadurch gekennzeichnet, dass** als Polyisocyanat zur Herstellung des Semiprepolymeren a) ein Diisocyanat eingesetzt wird.

4. Verfahren nach Anspruch 1, **dadurch gekennzeichnet, dass** als Polyisocyanat zur Herstellung des Semiprepolymeren a) ein aromatisches Diisocyanat eingesetzt wird.

5. Verfahren nach Anspruch 1, **dadurch gekennzeichnet, dass** als Polyisocyanat zur Herstellung des Semiprepolymeren a) Diphenylmethandiisocyanat eingesetzt wird.

6. Verfahren nach Anspruch 1, **dadurch gekennzeichnet, dass** das zweifunktionelle Polyetherol, herstellbar durch Anlagerung von Ethylenoxid und/oder Propylenoxid an H-funktionelle Startsubstanzen, zur Herstellung des Semiprepolymeren a), ein Molekulargewicht von 400 bis 6000 aufweist.

7. Verfahren nach Anspruch 1, **dadurch gekennzeichnet, dass** das zweifunktionelle Polyetherol, herstellbar durch Anlagerung von Ethylenoxid und/oder Propylenoxid an H-funktionelle Startsubstanzen, zur Herstellung des Semiprepolymeren a), ein Molekulargewicht von besonders bevorzugt von 1000 bis 4000 g/mol aufweist.

8. Verfahren nach Anspruch 1, **dadurch gekennzeichnet, dass** die Polyolkomponente b) neben dem Polytetramethylenetherglykol weitere Polyole mit einem Molekulargewicht im Bereich von 400 bis 6000, H-funktionelle Kettenverlängerer mit einem Molekulargewicht von kleiner 400 sowie übliche Hilfs- und Zusatzstoffe enthält.

9. Verfahren nach Anspruch 1, **dadurch gekennzeichnet, dass** das Polytetramethylenetherglykol ein Molekulargewicht im Bereich von 500 bis 4000 g/mol aufweist.

10. Verfahren nach Anspruch 1, **dadurch gekennzeichnet, dass** das Polytetramethylenetherglykol ein Molekulargewicht im Bereich von 1000 g/mol bis 3000 g/mol aufweist.

11. Verfahren nach Anspruch 1, **dadurch gekennzeichnet, dass** bei der Umsetzung der Komponenten a) und b) das Verhältnis der Isocyanat- zu den Polyolgruppen 120:100 bis 80:100 beträgt.

12. Verfahren nach Anspruch 1, **dadurch gekennzeichnet, dass** bei der Umsetzung der Komponenten a) und b) das Verhältnis der Isocyanat- zu den Polyolgruppen 105:100 bis 95:100 beträgt.

13. Polyurethan-Gießelastomere, herstellbar nach einem der Ansprüche 1 bis 12.

## Claims

1. A process for preparing pourable polyurethane elastomers by reacting an isocyanate component a) with a polyol component b), wherein the isocyanate component a) used is a semiprepolymer able to be prepared by reacting at least one polyisocyanate with at least one bifunctional polyetherol able to be prepared by addition of ethylene oxide and/or propylene oxide onto H-functional initiator substances and the polyol component (b) does not comprise any 3,5-dimethylthio-2,4-toluenediamine and as polyols comprises exclusively polytetramethylene ether glycol,
where the polytetramethylene ether glycol makes up from 30 to 70% by mass of the total amount of the hydroxylfunctional compounds of the components a) and b).

2. The process according to claim 1, wherein the semiprepolymer a) has an NCO content of from 10 to 25% by weight.

3. The process according to claim 1, wherein the polyisocyanate used for preparing the semiprepolymer a) is a diisocyanate.

4. The process according to claim 1, wherein the polyisocyanate used for preparing the semiprepolymer a) is an aromatic diisocyanate.

5. The process according to claim 1, wherein the polyisocyanate used for preparing the semiprepolymer a) is diphenylmethane diisocyanate.

6. The process according to claim 1, wherein the bifunctional polyetherol able to be prepared by addition of ethylene oxide and/or propylene oxide onto H-functional initiator substances and used for preparing the semiprepolymer a) has a molecular weight of from 400 to 6000.

7. The process according to claim 1, wherein the bifunctional polyetherol able to be prepared by addition of ethylene oxide and/or propylene oxide onto H-functional initiator substances and used for preparing the semiprepolymer a) has a molecular weight of more preferably from 1000 to 4000 g/mol.

8. The process according to claim 1, wherein the polyol component b) comprises not only the polytetramethylene ether glycol but also further polyols having a molecular weight in the range from 400 to 6000, H-functional chain extenders having a molecular weight of less than 400 and also customary auxiliaries and additives.

9. The process according to claim 1, wherein the polytetramethylene ether glycol has a molecular weight in the range from 500 to 4000 g/mol.

10. The process according to claim 1, wherein the polytetramethylene ether glycol has a molecular weight in the range from 1000 to 3000 g/mol.

11. The process according to claim 1, wherein, in the reaction of the components a) and b), the ratio of isocyanate groups to polyol groups is from 120:100 to 80:100.

12. The process according to claim 1, wherein, in the reaction of the components a) and b), the ratio of isocyanate groups to polyol groups is from 105:100 to 95:100.

13. A pourable polyurethane elastomer preparable according to any of claims 1 to 12.

## Revendications

1. Procédé pour la production d'élastomères de coulée polyuréthane faisant intervenir la transformation d'un composant isocyanate a) avec un composant polyol b), **caractérisé en ce que** sont utilisés en tant que composant isocyanate a) un semi-prépolymère, pouvant être produit par la transformation d'au moins un polyisocyanate avec au moins un polyéthérol bifonctionnel, pouvant être produit par l'addition d'oxyde d'éthylène et/ou d'oxyde de propylène à des substances de départ à groupement fonctionnel hydrogène et **en ce que** le composant polyol (b) ne comporte pas de 3,5-diméthylthio-2,4-toluènediamine et en tant que composant polyol comporte exclusivement du polytétraméthylèneétherglycol, la part du polytétraméthylèneétherglycol représentant entre 30 et 70 % en masse de la quantité totale des composés à groupement fonctionnel hydroxyle des composants a) et b) .

2. Procédé selon la revendication 1, **caractérisé en ce que** le semi-prépolymère a) présente un contenu de NCO compris entre 10 % en poids de NCO et 25 % en poids de NCO.

3. Procédé selon la revendication 1, **caractérisé en ce qu'**est utilisé en tant que polyisocyanate pour la production du semi-prépolymère a) un diisocyanate.

4. Procédé selon la revendication 1, **caractérisé en ce qu'**est utilisé en tant que polyisocyanate pour la production du semi-prépolymère a) un diisocyanate aromatique.

5. Procédé selon la revendication 1, **caractérisé en ce qu'**est utilisé en tant que polyisocyanate pour la production du semi-prépolymère a) du diisocyanate de diphénylméthane.

6. Procédé selon la revendication 1, **caractérisé en ce que** le polyéthérol bifonctionnel, pouvant être produit par addition d'oxyde d'éthylène et/ou d'oxyde de propylène à des substances de départ à groupement fonctionnel hydrogène pour la production du semi-prépolymère a) présente un poids moléculaire compris entre 400 et 6000.

7. Procédé selon la revendication 1, **caractérisé en ce que** le polyéthérol bifonctionnel, pouvant être produit par addition d'oxyde d'éthylène et/ou d'oxyde de propylène à des substances de départ à groupement fonctionnel hydrogène pour la production du semi-prépolymère a) présente un poids moléculaire compris, de préférence, entre 1000 et 4000 g/mol.

8. Procédé selon la revendication 1, **caractérisé en ce que** le composant polyol b) outre le polytétraméthylèneétherglycol comprend également d'autres polyols avec un poids moléculaire compris entre 400 et 6000, un prolongateur de chaîne à groupement fonctionnel hydrogène avec un poids moléculaire inférieur à 400 ainsi que des additifs et des adjuvants courants.

9. Procédé selon la revendication 1, **caractérisé en ce que** le polytétraméthylèneétherglycol présente un poids moléculaire compris entre 500 et 4000 g/mol.

10. Procédé selon la revendication 1, **caractérisé en ce que** le polytétraméthylèneétherglycol présente un poids moléculaire compris entre 1000 g/mol et 3000 g/mol.

11. Procédé selon la revendication 1, **caractérisé en ce que,** lors de la transformation des composants a) et b), le rapport des groupes isocyanates aux groupes polyols est compris entre 120:100 et 80:100.

12. Procédé selon la revendication 1, **caractérisé en ce que,** lors de la transformation des composants a) et b), le rapport des groupes isocyanates aux groupes polyols est compris entre 105:100 et 95:100.

13. Elastomères de coulée polyuréthane, pouvant être produits selon l'une des revendications 1 à 12.
